# EUROPÄISCHE PATENTSCHRIFT

(11) **EP 0 983 496 B1**
(45) Veröffentlichungstag und Bekanntmachung des Hinweises auf die Patenterteilung: **02.04.2003**
(21) Anmeldenummer: 97952764.5
(22) Anmeldetag: 13.11.1997
(51) Int. Cl.: G01N 15/00

(54) **VERFAHREN UND VORRICHTUNG ZUR BESTIMMUNG EINER ZELLDICHTE EINES WABENKÖRPERS, INSBESONDERE FÜR EINEN ABGASKATALYSATOR**
PROCESS AND DEVICE FOR DETERMINING THE CELL DENSITY OF A HONEYCOMBED BODY, IN PARTICULAR FOR AN EXHAUST FUME CATALYTIC CONVERTER
PROCEDE ET DISPOSITIF POUR DETERMINER LA DENSITE DES CELLULES D'UN CORPS EN NID D'ABEILLES, NOTAMMENT POUR UN CATALYSEUR DE GAZ D'ECHAPPEMENT

(30) Priorität: 21.11.1996 DE 19648272
(43) Veröffentlichungstag der Anmeldung: 08.03.2000
(73) Patentinhaber: Emitec Gesellschaft für Emissionstechnologie mbH, 53797 Lohmar (DE)
(72) Erfinder: WIERES, Ludwig, D-51491 Overath (DE); AOUAB, Abderrahim, D-22391 Hamburg (DE)
(74) Vertreter: Kahlhöfer, Hermann, Dipl.-Phys.
(86) Internationale Anmeldenummer: EP9706349
(87) Internationale Veröffentlichungsnummer: WO98022796

(56) Entgegenhaltungen:
- EP-A- 0 400 777
- EP-A- 0 599 081
- US-A- 4 319 840
- US-A- 4 557 773
- US-A- 4 845 558
- US-A- 4 975 972
- US-A- 5 433 904

## Beschreibung

Die vorliegende Erfindung betrifft ein Verfahren und Vorrichtungen zur Bestimmung einer flächenbezogenen Zelldichte einer Zellstruktur eines Wabenkörpers mit einer Vielzahl an einer Stirnseite des Wabenkörpers offen endender Kanäle. Solche Wabenkörper werden insbesondere als Trägerkörper für Abgaskatalysatoren eingesetzt, die eine katalytische Umsetzung von Abgasen aus einem Verbrennungsmotor erlauben. Die flächenbezogene Zelldichte ist eine wesentliche Kenngröße solcher Wabenkörper. Die Zelldichte wird üblicherweise auf die Querschnittsfläche, oder einen Teil von dieser, bezogen, d. h. sie liegt quer zu einer durch die Kanäle vorgegebenen Strömungsrichtung. Die gebräuchliche Einheit ist cells per square inch, cpsi.

Aus US-A-4 557 773 ist ein Verfahren und eine Vorrichtung zur Überwachung der Herstellung eines Wabenkörpers bekannt.

Bei der Serienfertigung der Wabenkörper wird die flächenbezogene Zelldichte festgestellt. Bei extrudierten Wabenkörpern ist es möglich, die flächenbezogene Zelldichte anhand der Negativform endgültig festzulegen, mit der die Wabenkörper serienweise hergestellt werden. Insbesondere aber bei der Herstellung von Wabenkörpern aus Metallblechlagen ändert sich die flächenbezogene Zelldichte während des Herstellungsprozesses, wobei ihr Endwert von der Führung des Herstellungsprozesses abhängt. Aus diesem Grund ist, wenigstens stichprobenartig, eine laufende Überwachung und ggf. Regelung des Herstellungsprozesses durch Kontrolle der flächenbezogenen Zelldichte erforderlich. Ein Weg ist, einzelne fertige Wabenkörper auszuwählen und ihre Zellenzahl durch Auszählen per Hand zu bestimmen. Durch Beziehen der Zellenzahl auf eine vorher bekannte oder gemessene Bezugsfläche, beispielsweise eine Querschnittsfläche eines Mantelrohrs eines Wabenkörpers, erhält man die flächenbezogene Zelldichte. Das Auszählen per Hand ist zeitraubend und fehlerträchtig. Die Person, die die Kontrolle durchführt, kann sich leicht verzählen und die Bezugsfläche ist unter Umständen nicht genau bekannt oder wird fehlerhaft gemessen. Bei einer Zelldichte von 600 cpsi beispielsweise kann mit vertretbarem Aufwand nur eine wesentlich kleinere Querschnittsfläche als 6.5 cm² (1 square inch) ausgezählt werden.

Aufgabe der vorliegenden Erfindung ist es, ein Verfahren und Vorrichtungen zur Bestimmung einer flächenbezogenen Zelldichte anzugeben, die eine automatisierbare, schnelle, kostengünstige und präzise Bestimmung erlauben.

Die Aufgabe wird erfindungsgemäß durch ein Verfahren mit den Merkmalen des Anspruchs 1 gelöst. Weiterbildungen sind Gegenstand der abhängigen Ansprüche. Weiterhin wird die Aufgabe durch eine Bildaufnahmevorrichtung zur Durchführung des Verfahrens mit den Merkmalen des Anspruchs 14 gelöst. Eine Weiterbildung ist Gegenstand des abhängigen Anspruchs. Darüber hinaus wird die Aufgabe durch eine Anordnung zur Durchführung des Verfahrens mit den Merkmalen des Anspruchs 16 gelöst. Im übrigen wird die Aufgabe auch durch einen computer-lesbaren Datenträger mit Computerprogramm gelöst, mit den Merkmalen des Anspruchs 17.

Bei dem erfindungsgemäßen Verfahren wird ein Abbild von zumindest einem Teil der Zellstruktur mit einem optischen Instrument aufgenommen und verarbeitet. Das Abbild hat einen bekannten oder feststellbaren Bildmaßstab, Wie bei dem oben beschriebenen manuellen Verfahren wird auch hier eine Zellenanzahl durch Zählen von Zellen ermittelt und durch Beziehen der Zellenanzahl auf eine Bezugsfläche die Zelldichte berechnet. Dies geschieht jedoch automatisch. Bei der Ermittlung der Bezugsbäche wird Gebrauch von dem Bildmaßstab gemacht. Die automatische Bestimmung kann schnell und zuverlässig geschehen und spart Personalkosten. Bei geringem Zusatzaufwand ist es auch möglich, den Prozentsatz der Stichproben zu erhöhen bzw. alle in einem Fertigungsprozess hergestellten Wabenkörper auf ihre flächenbezogene Zelldichte hin zu überprüfen. Das Verfahren kann unmittelbar in den Fertigungsprozeß integriert werden oder in einem separaten Verfahrensschritt ausgeführt werden. Wegen seiner Schnelligkeit ist es in beiden Fällen möglich, bei einer von Vorgaben abweichenden flächenbezogenen Zelldichte unverzüglich den Herstellungsprozess zu korrigieren, um auf die Vorgaben zu kommen. Es kann daher vermieden werden, daß ganze Serien von Wabenkörpern nicht den Vorgaben entsprechen.

Wenn nicht die ganze Zellstruktur eines Wabenkörpers sondern nur ein Teil von ihr ausgewertet wird, ist es möglich, daß Zellen unvollständig abgebildet werden. Bei einer vorteilhaften Ausgestaltung des Verfahrens werden nur vollständig abgebildete Zellen gezählt und mit Hilfe des Bildmaßstabes Zellquerschnittsflächen der einzelnen Zellen ermittelt. Die Summe der einzelnen Zellquerschnittsflächen ist gleich der Bezugsfläche. Diese Vorgehensweise ermöglicht eine hohe Präzision bei der Bestimmung der flächenbezogenen Zelldichte, da Schätzfehler beim Schätzen, wie groß eine unvollständig abgebildete Zelle ist, entfallen.

Bei einer Weiterbildung des Verfahrens bilden die gezählten Zellen einen zusammenhängenden Bereich der Zellstruktur. Ein Vorteil davon ist, daß das optische Instrument und der Wabenkörper in eine feste Lage zueinander gebracht werden können, die anschließend nicht mehr verändert zu werden braucht.

Nach einer Weiterbildung des Verfahrens wird ein Flächenmittelwert der Zellquerschnittsflächen berechnet, ein Flächentoleranzbereich festgelegt und, falls die Zellquerschnittsfläche einer Zelle den Flächentoleranzbereich unterschreitet, wird die Zelle bei der Berechnung der Zellenanzahl nicht mitgezählt. Damit können Fehler bei der Erkennung von Zellen korrigiert werden. In vielen Fällen kann angenommen werden, daß die Zellquerschnittsflächen fast alle etwa gleich groß sind. Unterschreitet die Zellquerschnittsfläche einer Zelle den Flächentoleranzbereich, dann wird davon ausgegangen, daß bei der Verarbeitung des Abbildes und/oder bei der Aufnahme des Abbildes fälschlicherweise eine nicht vorhandene Zellwand erfaßt wurde. Nach einer weiteren vorteilhaften Weiterbildung wird ein Flächenmittelwert der Zellquerschnittsflächen berechnet, ein Flächentoleranzbereich festgelegt und, falls die Zellquerschnittsfläche einer Zelle den Flächentoleranzbereich überschreitet, wird die Zelle bei der Zählung der Zellenzahl zwei- oder mehrfach gezählt. Wieviel mal sie zur Zellenanzahl beiträgt, hängt davon ab, wieviel mal größer die Zellquerschnittsfläche der Zelle als der Flächenmittelwert ist. Auf diese Weise können Fehler aufgrund von nicht erkannten Zellwänden korrigiert werden. Insbesondere bei Wabenkörpern mit aneinanderliegenden glatten und gewellten Blechlagen können einzelne unvollständig umrandete Zellen vorkommen, die mit dieser Weiterbildung des Verfahrens als vollständig umrandete Zellen behandelt werden. Dies ist erwünscht, da eine enge Verbindungsöffnung zweier Zellen nur geringe praktische Bedeutung hat. Überprüfungen des Verfahrens haben gezeigt, daß bei geeigneter Wahl des Flächentoleranzbereiches die flächenbezogene Zelldichte mit einem relativen Fehler von 0,5 % bestimmbar ist.

Nach einem Merkmal des Anspruchs 1 hat das Abbild einen bekannten oder feststellbaren Bildmaßstab. Günstig ist es, wenn ein Maßstabsobjekt, das bekannte Abmessungen hat, unverrückbar an der Stirnseite angebracht wird, vorzugsweise angeklebt wird, und wenn das Maßstabsobjekt in dem Abbild zumindest teilweise mitaufgenommen wird, so daß ein Maßstab existiert, der der Bildmaßstab ist oder mit dem der Bildmaßstab gebildet wird. Bei der Bildung des Bildmaßstabes können zusätzliche Informationen verwendet werden, beispielsweise ein etwaig bekannter Abstand von dem optischen Instrument zu der Stirnseite des Wabenkörpers. Ein mit dem Abbild zumindest teilweise mitaufgenommenes Maßstabsobjekt, das bekannte Abmessungen hat, bietet den Vorteil, daß Verzerrungen des Abbildes, die beispielsweise bei der Verarbeitung entstehen können, korrigierbar sind. Besonders vorteilhaft ist es, zwei voneinander unabhängige Bildmaßstäbe für zwei orthogonale Bildachsen des Abbildes zu verwenden.

Bevorzugt wird eine Ausgestaltung, bei der eine Ausdehnung des Maßstabobjekts entlang der Ausdehnung der Zellstruktur wesentlich größer ist als seine Ausdehnung senkrecht zur Ausdehnung der Zellstruktur. Zum einen ist es günstig, wenn die Ausdehnung des Maßstabsobjekts entlang der Zellstruktur groß ist, um einen möglichst geringen Maßstabsfehler zu erreichen. Zum anderen sollen nicht Teile der Zellstruktur, die neben dem Maßstabsobjekt liegen, durch große Ausdehnungen des Maßstabsobjekts senkrecht zur Ausdehnung der Zellstruktur teilweise verdeckt werden, da sonst unter Umständen das Abbild fehlerhaft aufgenommen und/oder fehlerhaft verarbeitet wird.

In einer besonders bevorzugten Ausgestaltung ist das Maßstabsobjekt ein Rahmen, vorzugsweise ein Kreisring, der einen Bereich von Zellen umrahmt. Dabei werden in dem Abbild der umrahmte Bereich und mindestens der innere Rahmenrand, vorzugsweise auch der äußere Rahmenrand, vollständig aufgenommen und ausschließlich Zellen aus dem umrahmten Bereich gezählt. Die Anwendung dieser Vorgehensweise setzt voraus, daß die umrahmten Zellen eine für alle Zellen repräsentative Größe haben oder daß speziell die umrahmten Zellen ausgewertet werden sollen. Günstig ist es, wenn sich der Rahmen optisch deutlich von der Zellstruktur abhebt, beispielsweise indem er eine gut lichtreflektierende Oberfläche aufweist. Der innere und/oder der äußere Rahmenrand dienen zur Ermittlung des Bildmaßstabes.

Bei einer zweckmäßigen Weiterbildung wird die Stirnseite beleuchtet, so daß von Zellrändern Licht in Richtung des optischen Instruments reflektiert wird. Die Stirnseite, bzw. der abzubildende Teil von ihr, sollte gleichmäßig beleuchtet werden, damit eine zuverlässige Erkennung der Zellränder gewährleistet ist.

Bei einer bevorzugten Weiterbildung des Verfahrens wird ein Helligkeitsmittelwert über mindestens einen Teil des Abbildes gebildet, wird ein Helligkeitsschwellenwert, der über dem Helligkeitsmittelwert liegt, festgelegt und wird aus der Position von Bildbereichen, deren Helligkeit über dem Helligkeitsschwellenwert liegt, auf die Position der Zellränder geschlossen. Vorausgesetzt, daß aus den Hohlräumen der Zellen weniger Licht in Richtung des optischen Instruments fällt als von den Zellrändern in diese Richtung reflektiert wird, bietet der Helligkeitsschwellenwert ein zuverlässiges Kriterium zum Erkennen der Zellränder.

Bei einer weiteren, besonders bevorzugten, Weiterbildung des erfindungsgemäßen Verfahrens wird das Abbild mit Hilfe eines Computerprogramms verarbeitet, das vorgegebbare Parameterwerte, insbesondere einen Maßstabswert, durch entsprechende Wertzuweisungen erhält. Dies erlaubt eine kostengünstige und besonders schnelle Verarbeitung des Abbildes.

Durch Anwendung eines Computers werden weitere, nützliche Weiterbildungen des Verfahrens erschlossen. Bei einer solchen Weiterbildung wird, als ein Ergebnis der Bildverarbeitung, eine Anordnung gezählter Zellen zweidimensional, vorzugsweise auf einem Bildschirm, dargestellt. Eine Variante dieser Art der Darstellung ist die Darstellung durch Ausdruck auf Papier mit Hilfe eines computergesteuerten Druckers. Die Darstellung auf einem Bildschirm ist jedoch in der Regel schneller. Sie ermöglicht, Ergebnisse der Bildverarbeitung in übersichtlicher Form zu visualisieren und die Arbeitsweise des Verfahrens zu verfolgen. Falls die Anordnung auch nicht gezählte Zellen enthält, ist es zweckmäßig, daß die gezählten Zellen gegenüber den nicht gezählten Zellen optisch, vorzugsweise farblich, hervorgehoben sind. Dies steigert die Übersichtlichkeit erheblich.

Eine erfindungsgemäße Bildaufnahmevorrichtung zur Durchführung des erfindungsgemäßen Verfahrens wird in Anspruch 14 definiert.

Bei einer Weiterbildung der Bildaufnahmevorrichtung weist diese eine Innenleuchte, vorzugsweise eine Spaltringleuchte, zur Beleuchtung der Stirnseite und eine umlaufend geschlossene Außenlichtabschirmung mit einer Objektöffnung auf. Die Innenleuchte ist so angeordnet, daß bei eingeschalteter Innenleuchte ihr Licht aus der Außenlichtabschirmung durch die Objektöffnung nach außen fällt. Die Objektöffnung ist vorzugsweise eine eben berandete Öffnung. Mit Hilfe der Außenlichtabschirmung kann die abzubildende Zellstruktur, bzw. ein Teil von ihr, von äußerem Licht ganz oder teilweise abgeschirmt werden. Bei bekannter Beleuchtungsstärke der Innenleuchte erleichtert dies die Bildverarbeitung erheblich. So kann das Abbild beispielsweise unter Verwendung eines vorher festgelegten Helligkeitsschwellenwertes bzw. Grauschwellenwertes verarbeitet werden.

Die Anordnung mit den Merkmalen des Anspruchs 16 weist eine solche Bildaufnahmevorrichtung zur Bestimmung der Zellendichte eines Wabenkörpers mit einer Vielzahl an einer Stirnseite des Wabenkörpers offen endender Kanäle auf, wobei der Rand der Objektöffnung, vorzugsweise umlaufend, an der Stirnseite des Wabenkörper anliegt.

Beforzugt umfaßt die erfindungsgemäße Vorrichtung einen computer-lesbaren Datenträger mit Computerprogramm, das dazu verwendet wird, entsprechend der beschriebenen Ausgestaltungen des erfindungsgemäßen Verfahrens das Abbild zu verarbeiten. Ein solcher Datenträger enthält wesentliche Merkmale einer oder mehrerer Ausgestaltungen des Verfahrens und ist gleichzeitig ein Schlüssel zur praktischen Ausführung des Verfahrens.

Weitere Merkmale des erfindungsgemäßen Verfahrens, der erfindungsgemäßen Bildaufnahmevorrichtung, der erfindungsgemäßen Anordnung zur Durchführung des Verfahrens und bevorzugte Ausführungsformen von diesen werden anhand der Zeichnung beschrieben. Die Erfindung ist jedoch nicht auf diese Ausführungsformen beschränkt.

Die einzelnen Figuren der Zeichnung zeigen:
- Fig. 1: eine Anordnung zur Durchführung des Verfahrens mit einem Wabenkörper, einem optischen Instrument und einem Computer,
- Fig. 2: einen Teil einer Zellstruktur mit einem kreisringförmigen Rahmen und
- Fig. 3: eine Bildaufnahmevorrichtung mit einer Matrixkamera, einer Innenleuchte und einer Außenlichtabschirmung.

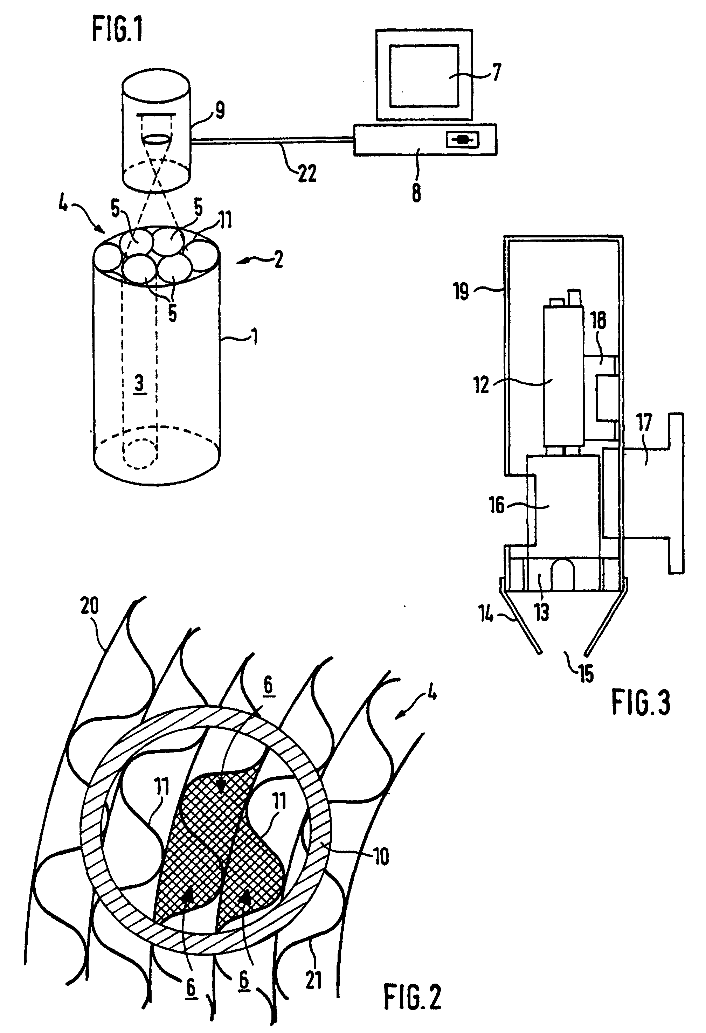

Der Wabenkörper 1 in der in Figur 1 dargestellten Anordnung weist eine Vielzahl an einer Stirnseite 2 offen endender Kanäle 3 auf. Dort wird eine Zellstruktur 4 mit von Zellrändern 11 berandeten Zellen 5 sichtbar. Über der Stirnseite 2 des Wabenkörpers 1 ist das optische Instrument 9 angeordnet, welches zum Zweck der digitalen Bildverarbeitung über eine Leitung 22 mit dem Computer 8 verbunden ist. Ergebnisse der Bildverarbeitung können auf dem Bildschirm 7 dargestellt werden.

Anhand von Figur 2 wird nun eine bevorzugte Ausführungsform des erfindungsgemäßen Verfahrens beschrieben. Der kreisringförmige Rahmen 10 wird auf die annähernd ebene Stirnseite eines zu untersuchenden Wabenkörpers aufgesetzt. Er besteht aus einem gut lichtreflektierenden Material. Sein innerer und sein äußerer Kreisdurchmesser sind bekannt. Nun wird ein Abbild von einem Teil der Zellstruktur 4, die durch glatte 20 und gewellte 21 Blechlagen gebildet wird, aufgenommen, so daß der gesamte kreisringförmige Rahmen und sein Inneres erfaßt werden. Das Abbild wird in digitale Bildpunkte zerlegt, wobei jedem Bildpunkt ein Grauwert zugeordnet ist. Die Zellränder 11 und der kreisringförmige Rahmen 10 werden anhand ihrer unterhalb eines Schwellenwertes liegenden Grauwerte erkannt. Es kommt vor, daß ein Bildpunkt zum Teil einen hellen Zellrand 11 und zum Teil einen von dem hellen Zellrand 11 berandeten dunklen Bereich repräsentiert. Ihm ist daher unter Umständen ein mittlerer Grauwert zugeordnet, der noch unterhalb des Schwellenwertes liegt. Auf diese Weise erscheinen die Zellränder 11 verbreitert. Bei der Bildverarbeitung wird die Verbreitung durch eine Ausdünnung der Zellränder 11 korrigiert.

Durch Auszählen der Bildpunkte in zwei verschiedenen, zueinander senkrechten Richtungen und Vergleich mit dem gegebenen Außendurchmesser des kreisringförmigen Rahmens 10 werden die Bildmaßstäbe für die beiden Richtungen, beispielsweise in Bildpunkten pro Inch, bestimmt. Es wird überprüft, ob eine unzulässig große Verzerrung des Bildes vorliegt, was auf eine verkippte Stellung des optischen Instruments schließen läßt. Gegebenenfalls wird die Bestimmung der flächenbezogenen Zelldichte abgebrochen.

Andernfalls wird bei der Bildverarbeitung der kreisringförmige Rahmen 10 von seinem Innern getrennt und nur das Innere weiterverarbeitet, d. h. die dem kreisringförmigen Rahmen 10 zugeordneten Grauwerte der Bildpunkte werden auf einen definierten Wert, z. B. 100, gesetzt. Da im allgemeinen nicht alle Zellen im Innern des kreisringförmigen Rahmens 10 vollständig abgebildete Zellen 6 sind, entsteht ein Bild mit Verästelungen am Rand. Die Verästelungen werden erkannt und ebenfalls abgetrennt. Übrig bleibt ein Bild mit einem zusammenhängenden Bereich vollständig abgebildeter Zellen 6, die nun gezählt werden. Außerdem werden Zellquerschnittsflächen bestimmt und zur Bezugsfläche aufsummiert. Es wird geprüft, ob unplausibel große oder kleine Zellquerschnittsflächen vorkommen. Bei einer zu kleinen Zellquerschnittsfläche wird davon ausgegangen, daß fälschlicherweise eine Zelle zuviel erkannt worden ist, und der Fehler wird durch Reduktion der Zellenanzahl um 1 korrigiert. Bei einer Zellquerschnittsfläche, die wesentlich größer als die mittlere Zellquerschnittsfläche ist, wird die Zellenanzahl entsprechend dem Quotienten der Zellquerschnittsfläche und der mittleren Zellquerschnittsfläche erhöht. Abschließend wird durch Beziehen der korrigierten Zellenanzahl auf die Summe der Zellquerschnittsflächen die flächenbezogene Zelldichte ermittelt.

Die in Figur 2 gezeigte Zellstruktur ist die eines Wabenkörpers mit abwechselnden glatten und gewellten Blechlagen. Da insbesondere bei solchen Wabenkörpern durch gewollte aber nicht zustandegekommene Blechverbindungen Doppel- oder Mehrfachzellen vorkommen, die aber als zwei bzw. mehrere Zellen gezählt werden sollen, ist das beschriebene Verfahren besonders vorteilhaft.

Figur 3 zeigt eine bevorzugte Ausführungsform einer Bildaufnahmevorrichtung zur Durchführung des erfindungsgemäßen Verfahrens. Ein Tubus 19, der von einem Tubushalter 17 gehalten wird, enthält eine Matrixkamera 12, die über einen Kamerahalter 18 mit dem Tubus verbunden ist, ein Objektiv 16 und eine Spaltringleuchte 13. An dem unteren Ende des Tubus 19 ist eine sich konisch zu einer Objektöffnung 15 verengende Außenlichtabschirmung 14 angebracht, wobei die Objektöffnung 15 eben berandet ist. Die Bildaufnahmevorrichtung kann beispielsweise mit Hilfe einer mit dem Tubushalter 17 verbundenen Verfahreinrichtung bis an die Stirnseite eines unter ihr positionierten Wabenkörpers verfahren werden, so daß der Rand der Objektöffnung 15 umlaufend an der Stirnseite des Wabenkörpers anliegt.

Die vorliegende Erfindung automatisiert die Bestimmung einer flächenbezogenen Zelldichte einer Zellstruktur eines Wabenkörpers. Insbesondere bei Verwendung einer Computer-gestützten Bildverarbeitung läßt sich die Zelldichte schnell und präzise bestimmen. Somit können Produktionsfehler schnell erkannt und auf diese Weise Kosten gespart werden.

### Bezugszeichenliste

- 1: Wabenkörper
- 2: Stirnseite
- 3: Kanal
- 4: Zellstruktur
- 5: Zelle
- 6: vollständig abgebildete Zelle
- 7: Bildschirm
- 8: Computer
- 9: optisches Instrument
- 10: kreisringförmiger Rahmen
- 11: Zellrand
- 12: Matrixkamera
- 13: Spaltringleuchte
- 14: Außenlichtabschirmung
- 15: Objektöffnung
- 16: Objektiv
- 17: Tubushalter
- 18: Kamerahalter
- 19: Tubus
- 20: glatte Blechlage
- 21: gewellte Blechlage
- 22: Leitung

## Patentansprüche

1. Verfahren zur automatischen Bestimmung einer flächenbezogenen Zelldichte einer Zellstruktur (4) eines Wabenkörpers (1) mit einer Vielzahl an einer Stirnseite (2) des Wabenkörpers (1) offen endender Kanäle (3), wobei dort die Zellstruktur (4) sichtbar ist, **dadurch gekennzeichnet, daß**
a) mit einem optischen Instrument (9) ein Abbild, das einen bekannten oder feststellbaren Bildmaßstab hat, von zumindest einem Teil der Zellstruktur (4) aufgenommen wird; und daß
b) das Abbild verarbeitet wird, wobei eine Zellenanzahl durch Zählen von Zellen (5, 6) ermittelt wird und durch Beziehen der Zellenanzahl auf eine mit Hilfe des Bildmaßstabes ermittelte Bezugsfläche die Zelldichte berechnet wird.

2. Verfahren nach Anspruch 1, **dadurch gekennzeichnet, daß** nur vollständig abgebildete Zellen (6) gezählt werden, daß mit Hilfe des Bildmaßstabes Zellquerschnittsflächen der einzelnen Zellen (6) ermittelt werden und daß die Summe der einzelnen Zellquerschnittsflächen gleich der Bezugsfläche ist.

3. Verfahren nach Anspruch 2, **dadurch gekennzeichnet, daß** die gezählten Zellen (6) einen zusammenhängenden Bereich der Zellstruktur (4) bilden.

4. Verfahren nach Anspruch 2 oder 3, **dadurch gekennzeichnet, daß** ein Flächenmittelwert der Zeliquerschnittsflächen berechnet wird, ein Flächentoleranzbereich festgelegt wird und, falls die Zellquerschnittsfläche einer Zelle (6) den Flächentoleranzbereich unterschreitet, die Zelle (6) nicht zur Zellenanzahl beiträgt.

5. Verfahren nach Anspruch 2, 3 oder 4, **dadurch gekennzeichnet, daß** ein Flächenmittelwert der Zellquerschnittsflächen berechnet wird, ein Flächentoleranzbereich festgelegt wird und, falls die Zellquerschnittsfläche einer Zelle (6) den Flächentoleranzbereich überschreitet, die Zelle (6) zwei- oder mehrfach zur Zellenanzahl beiträgt.

6. Verfahren nach einem der Ansprüche 1 bis 5, **dadurch gekennzeichnet, daß** ein Maßstabsobjekt (10), das bekannte Abmessungen hat, unverrückbar an der Stirnseite (2) angebracht wird, vorzugsweise angeklebt wird, und daß das Maßstabsobjekt (10) in dem Abbild zumindest teilweise mit aufgenommen wird, so daß ein Maßstab existiert, der der Bildmaßstab ist oder mit dem der Bildmaßstab gebildet wird.

7. Verfahren nach Anspruch 6, **dadurch gekennzeichnet, daß** eine Ausdehnung des Maßstabsobjekts (10) entlang der Ausdehnung der Zellstruktur (4) wesentlich größer ist als seine Ausdehnung senkrecht zur Ausdehnung der Zellstruktur (4).

8. Verfahren nach Anspruch 7, **dadurch gekennzeichnet, daß** das Maßstabsobjekt (10) ein Rahmen, vorzugsweise ein Kreisring, ist, der einen Bereich von Zellen (5, 6) umrahmt, daß in dem Abbild der umrahmte Bereich und mindestens der innere Rahmenrand, vorzugsweise auch der äußere Rahmenrand, vollständig aufgenommen werden und daß ausschließlich Zellen (5, 6) aus dem umrahmten Bereich gezählt werden.

9. Verfahren nach einem der Ansprüche 1 bis 8, **dadurch gekennzeichnet, daß** die Stirnseite (2) beleuchtet wird, so daß von Zellrändern (11) Licht in Richtung des optischen Instruments (9) reflektiert wird.

10. Verfahren nach Anspruch 9, **dadurch gekennzeichnet, daß** ein Helligkeitsmittelwert über mindestens einen Teil des Abbildes gebildet wird, daß ein Helligkeitsschwellenwert, der über dem Helligkeitsmittelwert liegt, festgelegt wird und daß aus der Position von Bildbereichen, deren Helligkeit über dem Helligkeitsschwellenwert liegt, auf die Position der Zellränder geschlossen wird.

11. Verfahren nach einem der Ansprüche 1 bis 10, **dadurch gekennzeichnet, daß** das Abbild mit Hilfe eines Computerprogramms verarbeitet wird, das vorgebbare Parameterwerte, insbesondere einen Maßstabswert, durch entsprechende Wertzuweisungen erhält.

12. Verfahren nach Anspruch 11, **dadurch gekennzeichnet, daß**, als ein Ergebnis der Bildverarbeitung, eine Anordnung gezählter Zellen (5, 6) zweidimensional, vorzugsweise auf einem Bildschirm (7), dargestellt wird.

13. Verfahren nach Anspruch 12, **dadurch gekennzeichnet, daß** auch nicht gezählte Zellen (5, 6) in der Anordnung enthalten sind und daß die gezählten Zellen (5, 6) gegenüber den nicht gezählten Zellen optisch, vorzugsweise farblich, hervorgehoben sind.

14. Vorrichtung zur automatischen Bestimmung einer flächenbezogenen Zelldichte einer Zellstruktur (4) eines Wabenkörpers (1), insbesondere zur Durchführung des Verfahrens nach einem der vorherigen Ansprüche, mit einem optischen Instrument (9), das eine Matrixkamera zur Aufnahme eines Abbildes des Wabenkörpers (1) enthält, und mit einer digitalen Datenverarbeitungsanlage (8), **dadurch gekennzeichnet, daß** zur Bestimmung der Zelldichte ein Maßstabobjekt (10), das einen bekannten oder feststellbaren Bildmaßstab hat und an einer Stirnseite (2) des Wabenkörpers (1) einen Bereich von Zellen (5, 6) umrahmt, vorgesehen ist, wobei mittels der Datenverarbeitungsanlage (8) eine Zellenzahl durch Zählen von Zellen (5, 6) ermittelt wird und durch Beziehen der so ermittelten Zellenanzahl auf eine mit Hilfe des Bildmaßstabes ermittelbaren Bezugsfläche die Zelldichte bestimmt wird.

15. Vorrichtung nach Anspruch 14, **dadurch gekennzeichnet, daß** eine Innenleuchte (13), vorzugsweise eine Spaltringleuchte, zur Beleuchtung der Stirnseite (2) und eine umlaufend geschlossene Außenlichtabschirmung (14) mit einer Objektöffnung (15) vorgesehen sind, wobei die Objektöffnung (15) vorzugsweise eine eben berandete Öffnung ist, wobei die Innenleuchte (13) so angeordnet ist, daß bei eingeschalteter Innenleuchte (13), ihr Licht aus der Außenlichtabschirmung (14) durch die Objektöffnung (15) nach außen fällt.

16. Vorrichtung nach Anspruch 14 oder 15, **dadurch gekennzeichnet, daß** der Rand der Objektöffnung (15), vorzugsweise umlaufend, an der Stirnseite (2) am Wabenkörper (1) anliegt.

17. Vorrichtung nach Anspruch 14 bis 16, **dadurch gekennzeichnet, daß** zur Verarbeitung des Abbildes, insbesondere gemäß dem Verfahren nach einem der Ansprüche 11 bis 13, ein Comnputer-lesbarer Datenträger mit Computerprogramm vorgesehen ist.

## Claims

1. A method of automatically determining an area-related cell density of a cell structure (4) of a honeycomb body (1) with a plurality of passages (3) which determinates open at an end (2) of the honeycomb body (1), wherein the cell structure (4) being visible there, **characterized in that**
a) an image which has a known or ascertainable image scale of at least a portion of the cell structure (4) is recorded with an optical instrument (9); and that
b) the image is processed, wherein a number of cells is determined by counting cells (5, 6) and the cell density is calculated by relating the number of cells to a reference area established by means of the image scale.

2. A method according to claim 1, **characterized in that** only cells (6) in respect of which a complete image is produced are counted, that cell cross-sectional areas of the individual cells (6) are established by means of the image scale, and that the sum of the individual cell cross-sectional areas is equal to the reference area.

3. A method according to claim 2, **characterized in that** the counted cells (6) form a continuous region of the cell structure (4).

4. A method according to claim 2 or 3, **characterized in that** an area average of the cell cross-sectional areas is calculated, an area tolerance range is established, and, if the cell cross-sectional area of a cell (6) falls below the area tolerance range, the cell (6) does not contribute to the number of cells.

5. A method according to claims 2, 3 or 4, **characterized in that** an area average of the cell cross-sectional areas is calculated, an area tolerance range is established, and, if the cell cross-sectional area of a cell (6) exceeds the area tolerance range, the cell (6) contributes to the number of cells two or more times.

6. A method according to one of claims 1 to 5, **characterized in that** a scale object (10) having known dimensions is immovably mounted, preferably glued, to the end (2), and that the scale object (10) is at least also partially recorded in the image so that there exists a scale which is the image scale or with which the image scale is formed.

7. A method to claim 6, **characterized in that** an extent of the scale object (10) along the extent of the cell structure (4) is substantially greater than its extent perpendicularly to the extent of the cell structure (4).

8. A method according to claim 7, **characterized in that** the scale object (10) is a frame, preferably a circular ring, which frames a region of cells (5, 6), that the framed region and at least the inner frame edge and preferably also the outer frame edge are completely recorded in the image, and that exclusively cells (5, 6) from the framed region are counted.

9. A method according to one of claims 1 to 8, **characterized in that** the end (2) is illuminated so that light is reflected from the cell edges (11) in the direction of the optical instrument (9).

10. A method according to claim 9, **characterized in that** a brightness average value over at least part of the image is formed, that a brightness threshold value which is above the brightness average value is established and that the position of the cell edges is inferred from the position of the image region whose brightness is over the brightness threshold value.

11. A method according to one of claims 1 to 10, **characterized in that** the image is processed by means of computer program which receives predeterminable parameter values, in particular a scale value, by suitable value allocations.

12. A method according to claim 11, **characterized in that** an arrangement of counted cells (5, 6) is represented in two-dimensional form, preferably on a display screen (7), as a result of the image processing operation.

13. A method according to claim 12, **characterized in that** uncounted cells (5, 6) are also included in the arrangement and that the counted cells (5, 6) are emphasized optically, preferably in colour, in comparison to the uncounted cells.

14. An arrangement for automatically determining an area-related cell density of a cell structure (4) of a honeycomb body (1), preferably for carrying out the method according to one of the previous claims, with an optical instrument (9) comprising a matrix camera for recording an image of the honeycomb body (1), and with a digital data processing installation (8), **characterized in that** a scale object (10) for determining the cell density is provided, which has a known or ascertainable image scale and frames a region of cells (5, 6) at an end (2) of the honeycomb body (1), wherein the number of cells is determined via the data processing installation (8) by counting cells (5, 6) and the cell density is calculated by relating the so determined number of cells to a reference area established by means of the image scale.

15. An arrangement according to claim 14, **characterized in that** an internal lamp (13), preferably a circular slit lamp, for illuminating the end (2), and a peripherally closed external lamp shielding means (14) with an object opening (15) is provided, wherein the object opening (15) is preferably an opening with a flat edge, wherein the internal lamp (13) is so arranged that when the internal lamp (13) is switched on the light thereof passes outwardly out of the external light shielding means (14) through the object opening (15).

16. An arrangement according to claim 14 or 15, **characterized in that** the edge of the object opening (15) bears, preferably in peripheral relationship against the edge (2) on the honeycomb body (1).

17. An arrangement according to one of claims 14 to 16, **characterized in that** a computer-readable data carrier with computer program is used for processing the image, preferably in accordance with the method according to one of claims 11 to 13.

## Revendications

1. Procédé pour déterminer automatiquement la densité cellulaire surfacique d'une structure cellulaire (4) d'un corps en nids d'abeilles (1) comportant une multiplicité de canaux (3) se terminant de façon ouverte sur une face frontale (2) du corps en nids d'abeilles (1), la structure cellulaire (4) y étant visible, **caractérisé en ce**
a) **qu'**au moyen d'un instrument optique (9) une image d'au moins une partie de la structure cellulaire (4) est prise, l'image ayant une échelle d'image connue ou pouvant être constatée, et **en ce que**
b) l'image est traitée, dans quel cas un nombre de cellules est déterminé en comptant des cellules (5, 6) et la densité cellulaire est calculée en rapportant le nombre de cellules sur une aire de référence déterminée à l'aide de l'échelle d'image.

2. Procédé selon la revendication 1, **caractérisé en ce qu'**uniquement des cellules (6) représentées complètement sont calculées, **en ce que** des aires cellulaires en section transversale des cellules (6) individuelles sont déterminées à l'aide de l'échelle d'image et **en ce que** le total des aires cellulaires individuelles en section transversale est égal à l'aire de référence.

3. Procédé selon la revendication 2, **caractérisé en ce que** les cellules comptées (6) forment une zone cohérente de la structure cellulaire (4).

4. Procédé selon la revendication 2 ou 3, **caractérisé en ce qu'**une valeur moyenne d'aire des aires cellulaires en section transversale est calculée, une zone de tolérance surfacique est définie et, au cas où l'aire cellulaire en section transversale d'une cellule (6) serait inférieure à la zone de tolérance surfacique la cellule (6) ne contribue pas au nombre de cellules.

5. Procédé selon la revendication 2, 3 ou 4, **caractérisé en ce qu'**une valeur moyenne d'aire des aires cellulaires en section transversale est calculée, une zone de tolérance surfacique est définie et, au cas où l'aire cellulaire en section transversale d'une cellule (6) dépasserait la zone de tolérance surfacique, la cellule (6) contribue deux fois ou de façon multiple au nombre de cellules.

6. Procédé selon l'une des revendications 1 à 5, **caractérisé en ce qu'**un objet d'échelle (10) qui a des dimensions connues, est rapporté de manière immuable sur la face frontale (2), de préférence collé, et **en ce que** l'objet d'échelle (10) est également au moins partiellement pris dans l'image, de sorte qu'il existe une échelle qui est l'échelle d'image ou avec laquelle l'échelle d'image est formée.

7. Procédé selon la revendication 6, **caractérisé en ce qu'**une extension de l'objet d'échelle (10) le long de l'extension de la structure cellulaire (4) est considérablement plus grande que son extension perpendiculaire par rapport à l'extension de la structure cellulaire (4).

8. Procédé selon la revendication 7, **caractérisé en ce que** l'objet d'échelle (10) est un cadre, de préférence un anneau de cercle, qui encadre une zone de cellules (5, 6), **en ce que** dans l'image la zone encadrée et au moins le bord intérieur de cadre, de préférence aussi le bord extérieur de cadre, sont complètement pris et **en ce qu'**uniquement des cellules (5, 6) de la zone encadrée sont comptées.

9. Procédé selon l'une des revendications 1 à 8, **caractérisé en ce que** la face frontale (2) est éclairée, de sorte que de bords (11) de cellules de la lumière est reflétée en direction de l'instrument optique (9).

10. Procédé selon la revendication 9, **caractérisé en ce qu'**une valeur moyenne de luminance sur au moins une partie de l'image est formée, **en ce qu'**une valeur-seuil de luminance est fixée qui se trouve au-dessus de la valeur moyenne de luminance et **en ce qu'**a partir de la position de zones d'images, dont la luminance se trouve au-dessus de la valeur-seuil de luminance, on fait la conclusion quant à la position des bords de cellules.

11. Procédé selon l'une des revendications 1 à 10, **caractérisé en ce que** l'image est traitée à l'aide d'un programme d'ordinateur qui obtient par des attributions respectives de valeurs des valeurs de paramètres pouvant être prédéterminées, notamment une valeur d'échelle.

12. Procédé selon la revendication 11, **caractérisé en ce qu'**en tant qu'un résultat du traitement d'image un ensemble de cellules (5, 6) comptées est représenté en deux dimensions, de préférence sur un écran (7).

13. Procédé selon la revendication 12, **caractérisé en ce que** des cellules (5, 6) non comptées sont aussi inclues dans l'ensemble et **en ce que** par rapport aux cellules non comptées les cellules (5, 6) comptées sont mises en valeur optiquement, de préférence de manière colorée.

14. Dispositif pour déterminer automatiquement la densité cellulaire surfacique d'une structure cellulaire (4) d'un corps en nids d'abeilles (1), notamment pour l'exploitation du procédé selon l'une des revendications précédentes, avec un instrument optique (9) comportant une caméra matricielle pour prendre une image du corps en nids d'abeilles (1), et avec une installation digitale de traitement de données (8), **caractérisé en ce que** pour déterminer la densité cellulaire un objet d'échelle (10) est prévu qui a une échelle d'image connue ou pouvant être constatée et qui sur une face frontale (2) du corps en nids d'abeilles (1) encadre une zone de cellules (5, 6), dans quel cas en comptant des cellules (5, 6) un nombre de cellules est déterminé à l'aide de l'installation de traitement de données (8) et la densité cellulaire est déterminée en rapportant le nombre de cellules ainsi déterminé sur une aire de référence déterminée à l'aide de l'échelle d'image.

15. Dispositif selon la revendication 14, **caractérisé en ce qu'**une lampe intérieure (13), de préférence une lampe à fente de bague pour illuminer la face frontale (2), et une protection contre la lumière extérieure (14), fermée et s'étendant de manière périphérique ayant une ouverture d'objet (15) sont prévues, dans quel cas la fermeture d'objet (15) est de préférence une ouverture à bord plan, la lampe intérieure (13) étant agencée de telle façon que quand la lampe intérieure (13) est allumée, sa lumière pénètre de la protection contre la lumière extérieure (14) à travers l'ouverture d'objet (15) vers l'extérieur.

16. Dispositif selon la revendication 14 ou 15, **caractérisé en ce que** le bord de l'ouverture de l'objet (15) s'applique contre la face frontale (2) sur le corps en nids d'abeilles (1), de préférence en s'étendant de manière périphérique.

17. Dispositif selon la revendication 14 à 16, **caractérisé en ce que** pour le traitement de l'image, notamment conforme au procédé selon l'une des revendications 11 à 13, un support de données avec programme d'ordinateur, lisible par ordinateur, est prévu.
